# EUROPÄISCHE PATENTSCHRIFT

(11) **EP 2 965 611 B1**
(45) Veröffentlichungstag und Bekanntmachung des Hinweises auf die Patenterteilung: **20.09.2017**
(21) Anmeldenummer: 15170973.0
(22) Anmeldetag: 08.06.2015
(51) Int. Cl.: A01D 45/02

(54) **STÄNGELHÄCKSLER FÜR EIN MAISERNTEGERÄT**
STALK CHOPPER FOR A MAIZE HARVESTING IMPLEMENT
HACHEUR DE TIGES POUR UN APPAREIL DE MOISSONNAGE DE MAÏS

(30) Priorität: 10.07.2014 DE 102014213419
(43) Veröffentlichungstag der Anmeldung: 13.01.2016
(73) Patentinhaber: Maschinenfabrik Kemper GmbH & Co. KG, 48703 Stadtlohn (DE)
(72) Erfinder: Bongert, Dirk, 48703 Stadtlohn (DE); Awater, Klaus, 46459 Rees-Haldern (DE)
(74) Vertreter: Holst, Sönke

(56) Entgegenhaltungen:
- AT-B- 301 234
- DE-A1-102011 118 207
- DE-A1-102011 118 322
- DE-A1-102012 014 081
- FR-A1- 2 613 902

## Beschreibung

Die vorliegende Erfindung bezieht sich auf einen Stängelhäcksler zur Anbringung unterhalb einer Reiheneinheit eines Maiserntegeräts, wobei der Stängelhäcksler ein erstes Messer und ein zweites Messer umfasst, die unterhalb der Reiheneinheit des Maiserntegeräts angebracht oder anbringbar und um zumindest im Wesentlichen vertikale Drehachsen in Rotation versetzbar sind und die Hüllkreise der Messer sich unterhalb eines Pflanzenstängelabgabebereichs der Reiheneinheit des Maiserntegeräts überdecken.

### Technologischer Hintergrund

Bei der Maisernte mit einem Pflücker, der Reiheneinheiten aufweist, in welchen die Pflanzen bei der Ernte durch Pflückwalzen nach unten eingezogen und die Kolben von den Stängeln abgestreift und anschließend durch Fördermittel zur weiteren Verarbeitung in eine Erntemaschine abtransportiert werden, werden die Pflanzenstängel durch die Pflückwalzen sukzessive nach unten ausgeworfen. Insofern die Stängel nicht durch Messer der Pflückwalzen zerkleinert werden, sind zum Zerkleinern der als Häckselgut auf dem Feld verbleibenden Pflanzenstängel üblicherweise Stängelhäcksler vorgesehen, die ein einziges, um eine zumindest etwa vertikal orientierte Achse rotierend angetriebenes, zweiarmiges Messer umfassen (DE 10 2004 008 342 A1). Als nachteilig ist anzusehen, dass die Stängel durch das einzige Messer nicht in allen Fällen hinreichend klein zerteilt werden. Außerdem wird das Häckselgut nur in eine Richtung ausgeworfen, was zu Streifenbildung der Pflanzenreste auf dem Feld führt und somit ein gleichmäßiges Einarbeiten in den Boden erschwert oder verhindert.

In der DE 20 05 352 C wurde vorgeschlagen, unterhalb eines Maispflückers paarweise angeordnete, miteinander kämmende Schneidwalzen anzubringen, die sich am rückwärtigen Ende des Maispflückers schräg nach hinten und unten erstrecken. Der Schnitt erfolgt hier im Wesentlichen entlang der Länge der Pflanze, was sehr langes und somit schwer verrottendes Häckselgut ergibt, das zudem ebenfalls in Streifen abgelegt wird.

In der DE 10 2004 020 447 A1 wurde vorgeschlagen, unterhalb eines in Verbindung mit einem Feldhäcksler eingesetzten Mähvorsatzes für die Ganzpflanzenernte einen Stängelhäcksler zur Zerkleinerung der auf dem Feld stehenbleibenden Stoppeln anzubringen, der mehrere koaxial übereinander angeordnete Messer umfasst, die sich gleichsinnig drehen. Hier werden die Stoppeln zwar durch die übereinander angeordneten Messer mehrfach geschnitten, jedoch ergibt sich auch hier der Nachteil der Streifenbildung.

Die als gattungsbildend angesehene DE 10 2011 118 322 A1 zeigt einen Maispflücker, bei dem unterhalb der Pflückwalzen beidseits des Pflückspaltes jeweils eine Häckselmesseranordnung angebracht ist, die gegensinnig rotieren und deren Hüllkreise sich überdecken.

### Aufgabe

Die vorliegende Erfindung hat sich zur Aufgabe gesetzt, einen verbesserten Stängelhäcksler bereitzustellen, der die erwähnten Nachteile nicht oder in vermindertem Ausmaße aufweist.

### Erfindung

Die vorliegende Erfindung wird durch die Ansprüche definiert.

Ein Stängelhäcksler einer Reiheneinheit eines Maiserntegeräts umfasst wenigstens zwei Messer, die unterhalb des Pflanzenstängelabgabebereichs der Reiheneinheit des Maiserntegeräts angebracht und um eine zumindest im Wesentlichen vertikale Drehachse in Rotation versetzbar sind. Die Hüllkreise der Messer überdecken sich unterhalb des Pflanzenstängelabgabebereichs der Reiheneinheit des Maiserntegeräts und die Messer wirken jeweils aus unterschiedlichen Richtungen auf von der Reiheneinheit nach unten abgegebene Pflanzenstängel ein. Das zweite Messer ist um eine zur Drehachse des ersten Messers koaxiale Drehachse gegensinnig zum zweiten Messer in Rotation versetzbar und unterhalb des ersten Messes angeordnet. Die beiden Messer sind somit koaxial übereinander angeordnet und drehen sich gegensinnig.

Mit anderen Worten trifft das erste Messer in einer ersten Richtung (z.B. von vorn her) auf die von der Reiheneinheit nach unten abgegebene Pflanzenstängel auf, während das zweite Messer aus einer zweiten, entgegengesetzten Richtung (z.B. von hinten her) auf die von der Reiheneinheit nach unten abgegebenen Pflanzenstängel auftrifft. Die geschnittenen Pflanzenteile werden daher in unterschiedlichen Richtungen geschnitten und auch auf das Feld abgegeben. Somit erzielt man eine Verbesserung der Schnittqualität, da die Stängel durch zwei Messer aus unterschiedlichen Richtungen zerkleinert werden, und durch die unterschiedlichen Schneid- und somit Abgaberichtungen vermeidet man die im Stand der Technik zu beobachtende Streifenbildung.

Die Messer können mittels eines Getriebes antreibbar sein, das Bestandteil eines Antriebs des Maiserntegeräts oder davon getrennt ist und durch eine Welle mit dem zweiten Messer in Antriebsverbindung steht, während es durch eine Hohlwelle, innerhalb derer sich die Welle erstreckt, mit dem ersten Messer in Antriebsverbindung steht. Das Getriebe ist eingerichtet, die Welle und die Hohlwelle in entgegengesetzten Drehrichtungen anzutreiben.

Der erfindungsgemäße Stängelhäcksler kann an einem Maiserntegerät in Form eines Maispflückers für einen Mähdrescher zur Zerkleinerung der vom Pflücker nach unten abgegebenen Pflanzenstängel verwendet werden, um dort die auf dem Feld stehen bleibenden Stoppeln zu zerkleinern. Er kann auch an einem Maiserntegerät in der Art eines mit Reiheneinheiten in Form von Mäh- und Einzugstrommeln ausgestatteten Mähvorsatzes zur Ganzpflanzenernte mit einem Feldhäcksler verwendet werden.

### Ausführungsform

Die Figuren zeigen eine Ausführungsform der Erfindung, wobei die Bezugszeichen nicht zu einer einschränkenden Auslegung der Patentansprüche herangezogen werden dürfen:
- Fig. 1: zeigt eine seitliche Ansicht einer selbstfahrenden Erntemaschine mit einem Maiserntegerät in Form eines Maispflückers, an dessen Unterseite ein erfindungsgemäßer Stängelhäcksler angebracht ist; und
- Fig. 2: eine perspektivische Ansicht einer Reiheneinheit des Maispflückers mit einer Ausführungsform des Stängelhäckslers.

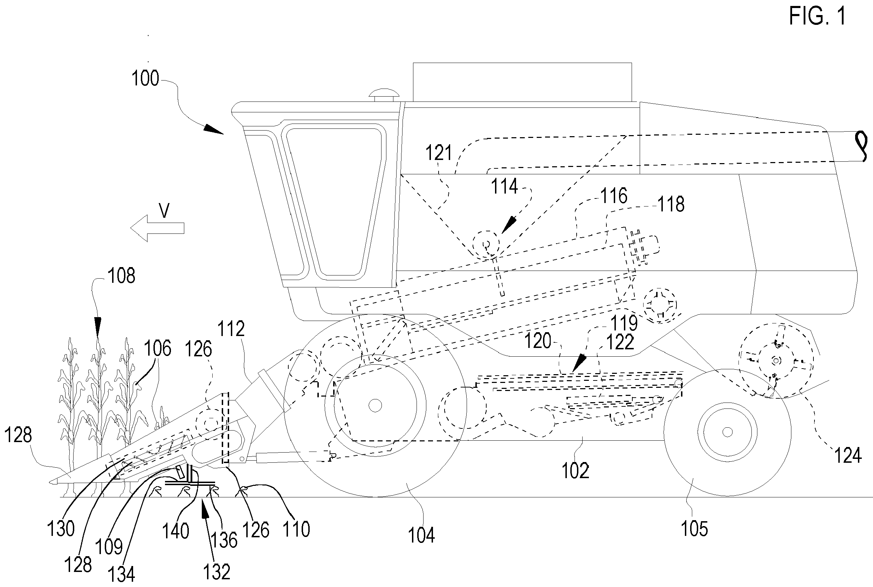

Die Figur 1 zeigt eine selbstfahrende Erntemaschine 100 in der Art eines Mähdreschers. Die Erntemaschine 100 umfasst ein sich auf vorderen, angetriebenen Rädern 104 und rückwärtigen, lenkbaren Rädern 105 abgestütztes Fahrgestell 102, an dessen Vorderseite ein Einzugsförderer 112 angeordnet ist, der im Betrieb von einem an seiner Vorderseite lösbar befestigten Maiserntegerät 108 aufgenommenes Erntegut einer Dresch- und Trenneinrichtung zuführt, die hier aus einem axialen Rotor 118 und einem Gehäuse 116 aufgebaut ist. Ausgedroschene Körner werden in einer Reinigung 119 mit einem Obersieb 120 und einem Untersieb 122 gereinigt und einem Korntank 121 zugeführt, aus dem sie mittels eines Förderers 114 auf ein Transportfahrzeug überladen werden können. An der Rückseite der Dresch- und Trenneinrichtung ausgeworfene Erntegutreste werden mittels eines Strohhäckslers 124 zerkleinert und auf dem Feld verteilt.

Das Maiserntegerät 108 umfasst einen Rahmen 126, der eine Anzahl an seitlich nebeneinander angeordneten Reiheneinheiten 152 zum Pflücken von Maispflanzen 106 umfasst, zwischen denen jeweils Teilerspitzen 128 angeordnet ist. Die Reiheneinheiten 152 umfassen jeweils zwei Pflückwalzen 128, welche die Stängel 109 der Maispflanzen 106 zwischen sich nach unten einziehen und darüber angeordnete Kettenförderer 130, die an Abstreifblechen von den Stängeln getrennte Kolben nach hinten abfördern, wo sie über eine Querförderschnecke 126 dem Einzugsförderer 112 zugeführt werden.

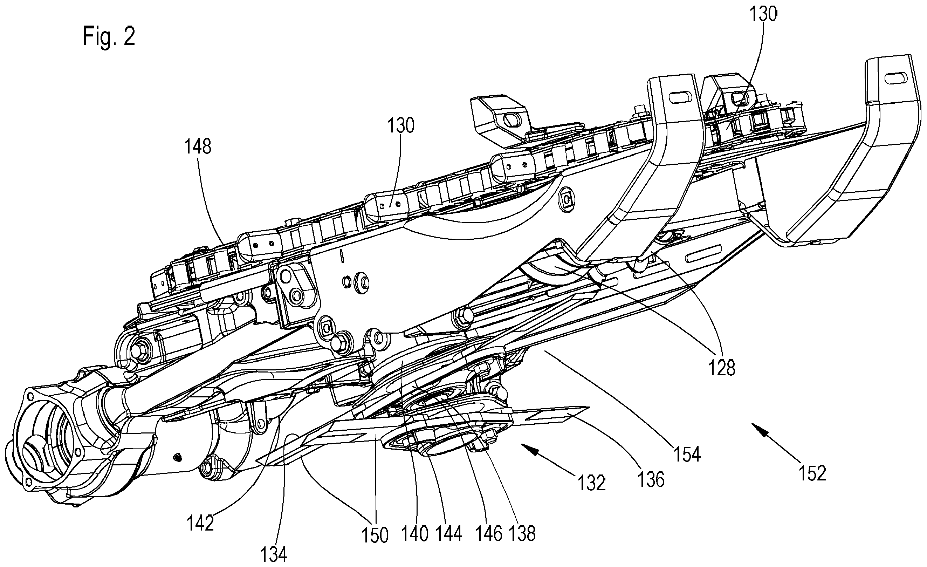

Unterhalb der Pflückwalzen 128 werden sukzessive Pflanzenstängel 109 in einem Pflanzenstängelabgabebereich 154 nach unten abgegeben und mittels eines Stängelhäckslers 132 zerkleinert. Der Stängelhäcksler 132 umfasst ein erstes, oberes Messer 134 und ein koaxial darunter angeordnetes, zweites Messer 136. Die Messer 134, 136 rotieren gegensinnig um etwa vertikale Achsen und werden durch ein Getriebe 142 (vgl. Figur 2) angetrieben. Das zweite Messer 136 wird mittels einer Welle 138 angetrieben, die sich durch eine Hohlwelle 140 hindurch erstreckt, die zum Antrieb des ersten Messers 134 dient. Die Drehgeschwindigkeit der beiden Messer 134, 136 kann gleich oder unterschiedlich sein.

Die Figur 2 zeigt eine perspektivische Ansicht einer Reiheneinheit 152. Das Getriebe 142 ist in den Antrieb der Pflückwalzen 128 und Kettenförderer 130 integriert, obwohl es in einer anderen Ausführungsform auch separat davon ausgeführt und somit nachrüstbar sein kann. Die Welle 138 treibt eine mittlere Halterung 144 an, an der zwei als zweite Messer 136 dienende, in sich flache und mit Schneidkanten versehene Schlegel um eine zur Drehachse der Welle 138 parallel verlaufende Achse frei pendelnd aufgehängt sind. Die Hohlwelle 140 treibt ebenfalls eine mittlere Halterung 146 an, an der zwei als erste Messer 134 dienende, mit Schneidkanten versehene Schlägel 150 um eine zur Drehachse der Hohlwelle 140 parallel verlaufende Achse frei pendelnd aufgehängt sind. Mittels eines Umschalthebels kann das Getriebe 142 und somit der Antrieb der Messer 134, 136 abgeschaltet werden. Bei einer anderen Ausführungsform können die Messer 134 und/oder 136 auch eine kleinere oder größere Anzahl an Schlägeln 150 umfassen als gezeigt, oder letztere könnten auch starr an der Halterung 144 bzw. 146 befestigt sein.

Durch die gegensinnige Drehrichtung der Messer 134, 136 erreicht man ein verbessertes Ergebnis beim Häckseln der Pflanzenstängel 109 und vermeidet die bei einzelnen Messern im Stand der Technik zu beobachtende Streifenbildung. Die Messer 134 und insbesondere 136 schneiden im Übrigen auch die im Boden verbleibenden Pflanzenstoppel 110 kurz ab.

## Patentansprüche

1. Maiserntegerät (108) mit einer Reiheneinheit (152) und einem unterhalb der Reiheneinheit (152) angebrachten Stängelhäcksler (132), wobei der Stängelhäcksler (132) ein erstes Messer (134) und ein zweites Messer (136) umfasst, die unterhalb der Reiheneinheit (152) des Maiserntegeräts (108) angebracht und um zumindest im Wesentlichen vertikale Drehachsen in Rotation versetzbar sind und die Hüllkreise der Messer (134, 136) sich unterhalb eines Pflanzenstängelabgabebereichs (154) der Reiheneinheit (152) des Maiserntegeräts (108) überdecken und die Messer (132, 134) jeweils aus unterschiedlichen Richtungen auf von der Reiheneinheit (152) nach unten abgegebene Pflanzenstängel einwirken, **dadurch gekennzeichnet, dass** das zweite Messer (136) um eine zur Drehachse des ersten Messers (134) koaxiale Drehachse gegensinnig zum ersten Messer (134) in Rotation versetzbar und unterhalb des ersten Messers (134) angeordnet ist.

2. Maiserntegerät (108) nach Anspruch 1, wobei die Messer (134, 136) mittels eines Getriebes (142) antreibbar sind, das Bestandteil eines Antriebs des Maiserntegeräts (108) oder davon getrennt ist und durch eine Welle (138) mit dem zweiten Messer (136) in Antriebsverbindung steht und durch eine Hohlwelle (140), innerhalb derer sich die Welle (138) erstreckt, mit dem ersten Messer (134) in Antriebsverbindung steht, wobei das Getriebe (142) eingerichtet ist, die Welle (138) und die Hohlwelle (140) in entgegen gesetzten Drehrichtungen anzutreiben.

3. Maiserntegerät (108) nach einem der vorhergehenden Ansprüche, wobei die Messer (134, 136) jeweils eine mittlere Halterung (144) mit daran pendelnd aufgehängten, in sich flachen Schlegeln mit Schneidkanten umfassen.

4. Maiserntegerät (108) nach einem der vorhergehenden Ansprüche, das in Form eines Maispflückers oder Mähvorsatzes ausgeführt ist.

## Claims

1. Maize harvesting implement (108) with a row unit (152) and a stalk chopper (132) mounted below the row unit (152), wherein the stalk chopper (132) comprises a first blade (134) and a second blade (136) which are mounted below the row unit (152) of the maize harvesting implement (108) and can be set into rotation about at least substantially vertical axes of rotation, and the envelope circles of the blades (134, 136) overlap below a plant stalk dispensing region (154) of the row unit (152) of the maize harvesting implement (108), and the blades (132, 134) each act from different directions on plant stalks dispensed downwards by the row unit (152), **characterized in that** the second blade (136) can be set into rotation in the opposite direction to the first blade (134) about an axis of rotation coaxial with respect to the axis of rotation of the first blade (134) and is arranged below the first blade (134).

2. Maize harvesting implement (108) according to Claim 1, wherein the blades (134, 136) are drivable by means of a gearing (142) which is part of a drive of the maize harvesting implement (108) or separate therefrom and is connected in terms of drive to the second blade (136) by a shaft (138) and is connected in terms of drive to the first blade (134) by a hollow shaft (140) within which the shaft (138) extends, wherein the gearing (142) is configured to drive the shaft (138) and the hollow shaft (140) in opposed directions of rotation.

3. Maize harvesting implement (108) according to either of the preceding claims, wherein the blades (134, 136) each comprise a central holder (144) with flailers which are suspended in an oscillating manner thereon, are flat per se and have cutting edges.

4. Maize harvesting implement (108) according to one of the preceding claims, which is embodied in the form of a maize picker or mowing header.

## Revendications

1. Appareil de récolte de maïs (108) comprenant une unité de rangs (152) et un hacheur de tiges (132) monté sous de l'unité de rangs (152), le hacheur de tiges (132) comprenant un premier couteau (134) et un deuxième couteau (136) qui sont montés sous l'unité de rangs (152) de l'appareil de récolte de maïs (108) et qui peuvent être mis en rotation autour d'axes de rotation au moins essentiellement verticaux et les cercles d'enveloppe des couteaux (134, 136) se recouvrant sous une région de dépôt de tiges de plantes (154) de l'unité de rangs (152) de l'appareil de récolte de maïs (108) et les couteaux (132, 134) agissant à chaque fois à partir de directions différentes sur des tiges de plantes déposées vers le bas par l'unité de rangs (152), **caractérisé en ce que** le deuxième couteau (136) peut être mis en rotation autour d'un axe de rotation coaxial à l'axe de rotation du premier couteau (134) en sens inverse par rapport au premier couteau (134) et est disposé sous le premier couteau (134).

2. Appareil de récolte de maïs (108) selon la revendication 1, dans lequel les couteaux (134, 136) peuvent être entraînés au moyen d'une transmission (142), qui fait partie d'un entraînement de l'appareil de récolte de maïs (108) ou qui est séparée de celui-ci et est en liaison d'entraînement par un arbre (138) avec le deuxième couteau (136) et est en liaison d'entraînement avec le premier couteau (134), par un arbre creux (140) à l'intérieur duquel s'étend l'arbre (138), la transmission (142) étant prévue pour entraîner l'arbre (138) et l'arbre creux (140) dans des sens de rotation opposés.

3. Appareil de récolte de maïs (108) selon l'une quelconque des revendications précédentes, dans lequel les couteaux (134, 136) comprennent à chaque fois un support central (144) avec des fléaux en soi plats avec des arêtes de coupe, suspendus de manière pendulaire sur celui-ci.

4. Appareil de récolte de maïs (108) selon l'une quelconque des revendications précédentes, qui est réalisé sous la forme d'une récolteuse de maïs ou d'une tête de récolte.
